# EUROPÄISCHE PATENTSCHRIFT

(11) **EP 3 256 901 B1**
(45) Veröffentlichungstag und Bekanntmachung des Hinweises auf die Patenterteilung: **11.01.2023**
(21) Anmeldenummer: 16702574.1
(22) Anmeldetag: 03.02.2016
(51) Int. Cl.: G02B 27/42, G02B 1/04, G02B 27/01

(54) **OPTIKELEMENT**
OPTICAL ELEMENT
ÉLÉMENT OPTIQUE

(30) Priorität: 12.02.2015 DE 102015102012
(43) Veröffentlichungstag der Anmeldung: 20.12.2017
(73) Patentinhaber: tooz technologies GmbH, 73430 Aalen (DE)
(72) Erfinder: SCHUSTER, Karl-Heinz, 89551 Königsbronn (DE)
(74) Vertreter: Patentanwälte Geyer, Fehners & Partner mbB
(86) Internationale Anmeldenummer: PCT/EP2016/052261
(87) Internationale Veröffentlichungsnummer: WO 2016/128270

(56) Entgegenhaltungen:
- EP-A1- 1 942 364
- EP-A1- 1 988 333
- WO-A1-2009/134365
- WO-A2-2008/020450
- DE-U1- 20 317 099
- US-A1- 2014 093 650

## Beschreibung

Die Erfindung betrifft ein Optikelement, in dem eine optisch wirksame Struktur eingebettet ist, für eine auf den Kopf eines Benutzers aufsetzbare und ein Bild erzeugende Anzeigevorrichtung. Die Erfindung betrifft weiter eine Anzeigevorrichtung, die das Optikelement umfasst und ein Verfahren zur Herstellung des Optikelements.

Ein solches Optikelement kann beispielsweise als Brillenglas verwendet werden, wobei eine Abbildungsoptik ein erzeugtes Bild so abbildet, dass es der Benutzer als virtuelles Bild wahrnehmen kann.

Als Linsenmaterial für Objektive und Brillen wurde ursprünglich nur optisches Glas eingesetzt. Mit den Fortschritten in der Herstellung von optisch transparenten Kunststoffen wurden solche Kunststoffe vermehrt in Objektiven und heute überwiegend auch in Brillen eingesetzt. Kunststoffe als Linsenmaterial haben Anforderungen, die in Richtung optischer Gläser gehen, also eine gute optische Homogenität, hohe spektrale Transmission, reproduzierbare Brechzahlwerte und Dispersion, geringe Spannungsdoppelbrechung, geringe innere Streuung, geringe Wasseraufnahme, hohe chemische Resistenz bei Abschlusselementen und hohe geometrische Genauigkeit bei der Bearbeitung sowie eine hohe Maßhaltigkeit beim Gießen oder Spritzgießen. Die Schwerpunkte für Brillenmaterialien liegen bei einem geringen Gewicht, dünner Geometrie durch hohe Brechzahl des Materials, UV-Schutz, hohe mechanische Belastbarkeit als Schutzbrille, Sportbrille und Abriebfestigkeit durch Härte des Substrats oder harte Schutzschichten.

Wenn in einer Brille weitere Funktionen vereint werden, beispielsweise durch die Anforderung der modernen Kommunikationsgesellschaft, wie der Einkopplung von Bildinformationen in das Auge eines Betrachters, entsteht ein optischer Aufbau, der die Anforderungen einer Brille und eines Objektivs beinhaltet.

Eine hohe mechanische Belastbarkeit kann beispielsweise durch Kunststoffe aus Polycarbonat oder Polyurethan erreicht werden. Beispiele für Handelsprodukte sind Trivex^{®} und NXT^{®} Polyurethan. Der zugrundeliegende Mechanismus der Schlagzähigkeit der Materialien Trivex und NXT beruht unter anderem auf darin befindlichen Partikeln aus härterem Material, wodurch ein sich ausbildender Riss viel längere Wege durch das Material gehen muss und dabei mehr Energie verbraucht als bei einem Material ohne solche Partikel. Andererseits verhindern solche Partikel oder Mikrokristallite in Polycarbonaten und Polyurethanen das Ausformen von Funktionsstrukturen wie Gittern oder Fresnel-Strukturen, da sich an Spitzen Formfehler ergeben, wodurch die optische Qualität leidet. Überdies streuen die Mikrokristallite je nach Größe im sichtbaren Bereich, wodurch erhöhtes Streulicht entsteht, das bei größeren optischen Wegen stört.

US 2014/0093650 A1 betrifft ein Verfahren zur Herstellung eines zusammengesetzten Lichtleiters. EP 1 988 333 A1 beschreibt einen Doppelfilmlichtleiter.

Es ist daher Aufgabe der Erfindung, die Nachteile des Standes der Technik zu überwinden und ein Optikelement mit optisch wirksamer Struktur bereitzustellen, das bei hoher mechanischer Belastbarkeit gleichzeitig eine hohe optische innere und äußere Qualität aufweist.

Diese Aufgabe wird gelöst durch ein Optikelement nach Anspruch 1, eine Anzeigevorrichtung nach Anspruch 10 und ein Verfahren zur Herstellung eines Optikelements nach Anspruch 11.

Das Optikelement für eine auf den Kopf eines Benutzers aufsetzbare und ein Bild erzeugende Anzeigevorrichtung weist eine Vorderseite und eine Rückseite, einen Einkoppelabschnitt und einen vom Einkoppelabschnitt beabstandeten Auskoppelabschnitt und einen Lichtführungskanal auf, der dazu geeignet ist, Lichtbündel von Pixeln des erzeugten Bildes, die über den Einkoppelabschnitt des Optikelementes in das Optikelement eingekoppelt sind, im Optikelement bis zum Auskoppelabschnitt zu führen, von dem sie aus dem Optikelement ausgekoppelt werden, wobei der Auskoppelabschnitt eine optisch wirksame Struktur aufweist, die eine Umlenkung der Lichtbündel zur Auskopplung bewirkt, und wobei das Optikelement ein erstes Teil aus einem ersten Material aufweist, das die optisch wirksame Struktur umfasst, und das Optikelement ein zweites Teil aus einem dritten Material aufweist, wobei die beiden Teile mit einer Klebstoffzusammensetzung aus einem zweiten Material miteinander verbunden sind, wobei das erste Material ein Cycloolefinpolymer oder mehrere Cycloolefinpolymere umfasst, das erste und dritte Material voneinander verschieden sind, das zweite und dritte Material jeweils mindestens ein organisches Polymer umfasst und die Brechzahldifferenzen für mindestens eine Wellenlänge zwischen 380 nm und 800 nm zwischen dem ersten und dem zweiten Material und zwischen dem zweiten und dem dritten Material jeweils ≤ 0,02 sind.

Überraschenderweise lässt sich mit diesem Optikelement eine hervorragende optische innere und äußere Qualität und gleichzeitig eine hohe mechanische Belastbarkeit erreichen und das Optikelement eignet sich daher hervorragend für Brillengläser mit integrierter Optik, etwa zur Dateneinspiegelung.

Die Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten Abbildungsoptik weist das erfindungsgemäße Optikelement auf und kann das erzeugte Bild im auf dem Kopf des Benutzers aufgesetzten Zustand der Haltevorrichtung so abbilden, dass es der Benutzer als virtuelles Bild wahrnehmen kann.

Das Verfahren zur Herstellung des Optikelements, in dem eine optisch wirksame Struktur eingebettet ist, erfolgt mit folgenden Schritten:
a) Bereitstellen eines Teils, das an seiner Oberseite einen strukturierten Abschnitt aufweist,
b) Aufbringen einer für den vorbestimmten Wellenlängenbereich optisch wirksamen Beschichtung auf dem strukturierten Abschnitt, um die optisch wirksame Struktur zu bilden,
c) Bereitstellen eines Teils, das eine Unterseite aufweist, die eine komplementäre Form zur Form der Oberseite aufweist,
d) Aufbringen einer Klebstoffzusammensetzung auf der Oberseite des ersten Teils und/oder der Unterseite des zweiten Teils und
e) Verbinden der Oberseite des ersten Teils mit der Unterseite des zweiten Teils mittels der Klebstoffzusammensetzung, so dass ein Optikelement hergestellt wird, in dem die optisch wirksame Struktur vergraben ist.

Der Vorteil der Verwendung eines ersten Materials aus einem oder mehreren Cycloolefinpolymeren liegt insbesondere darin begründet, dass sich mit diesem Material komplexe optische Strukturen, insbesondere deren feine Konturen, sehr genau abformen lassen. Ferner haben Cycloolefinpolymere eine hohe Fließfähigkeit, wodurch ein Spritzgießen besonders wirtschaftlich möglich wird. Die Stabilität des erfindungsgemäßen Optikelements, die insbesondere für Datenbrillen wichtig ist, wird wiederum durch das zweite Teil erreicht, das mit dem ersten Teil verklebt ist und aus einem anderen Material besteht.

Zur Vermeidung von Aberrationen werden die Brechzahlen der drei genannten Materialen so aufeinander abgestimmt, dass die Brechzahldifferenzen möglichst gering sind. Vorzugsweise sind die Brechzahldifferenzen für mindestens eine Wellenlänge zwischen 380 nm und 800 nm zwischen dem ersten und dem zweiten Material ≤ 0,01 und zwischen dem zweiten und dem dritten Material ≤ 0,01, insbesondere jeweils ≤ 0,005 und besonders bevorzugt jeweils ≤ 0,001. Die Brechzahldifferenz für mindestens eine Wellenlänge zwischen 380 nm und 800 nm zwischen dem ersten und dem dritten Material sind vorzugsweise ≤ 0,02, insbesondere ≤ 0,01, besonders bevorzugt ≤ 0,005 und weiter bevorzugt ≤ 0,001. In einer besonders bevorzugt Ausführungsform sind die Brechzahldifferenzen zwischen allen drei Materialien, d. h. zwischen dem ersten und dem zweiten Material, dem ersten und dem dritten Material und dem zweiten und dem dritten Material jeweils ≤ 0,02, insbesondere ≤ 0,01, besonders bevorzugt ≤ 0,005 und weiter bevorzugt ≤ 0,001. Darüber hinaus ist es bevorzugt, dass die angegebenen Brechzahldifferenzen bei derselben Wellenlänge zwischen 380 nm und 800 nm vorliegen, insbesondere bei 589,3 nm. Bei diesen geringen Brechzahlunterschieden verschwindet quasi optisch die Grenzfläche zwischen den Materialien für den vorbestimmten Wellenlängenbereich und die optische Qualität ist dadurch besonders hoch.

In einer weiteren bevorzugten Ausführungsform umfasst das erste Material eine Mischung aus mindestens zwei voneinander verschiedenen Cycloolefinpolymeren. Solche verschiedenen Cycloolefinpolymere weisen in der Regel unterschiedliche Brechzahlen auf und über die Mischung von zwei oder mehr verschiedenen Cycloolefinpolymeren ist eine besonders genaue Anpassung an der Brechzahl an das zweite und/oder dritte Material möglich.

Das erste Material umfasst ein Cycloolefinpolymer oder mehrere Cycloolefinpolymere. Der Anteil des einen Cycloolefinpolymers oder der mehreren Cycloolefinpolymere ist, bezogen auf das Gesamtgewicht des ersten Materials, mindestens 95 Gew.-%, insbesondere mindestens 98 Gew.-%. Das Cycloolefinpolymer kann die üblichen Additive enthalten, z.B. Weichmacher, Stabilisatoren und Antioxidantien.

Als Cycloolefinpolymer (COP) können die dem Fachmann bekannten Cycloolefinpolymere eingesetzt werden, beispielsweise solche wie in der EP 0 872 506 B1 beschrieben. Dabei kann es sich um Polymere von mono- oder polycyclischen Olefinen handeln, jeweils mit einer oder mehreren Doppelbindungen, z. B. Cyclopenten, Cyclohexen, Cyclohepten, Norbornen und deren Derivate, insbesondere Alkylderivate, Cyclopentadien, insbesondere die C5-Fraktion aus Dicyclopentadien. Die Polymere können gegebenenfalls in Form von Copolymeren mit geradkettigen oder verzweigten Olefinen wie z. B. Ethylen, Propylen, 1-Buten, Isobutylen, 1-Penten, 1-Hexen, 1-Octen oder 3-Methyl-1-Buten vorliegen. Besonders bevorzugte Cycloolefinpolymere sind die Handelsprodukte Zeonex^{®} und Zeonor^{®}, insbesondere Zeonex^{®}.

Für das dritte Material ist es ebenfalls bevorzugt, dass es zwei oder mehr Polymere umfasst, um eine besonders genaue Anpassung der Brechzahl an die anderen Materialien zu ermöglichen. Das oder die Polymere des dritten Materials machen wie beim ersten Material mindestens 95 Gew.-%, insbesondere mindestens 98 Gew.-%, bezogen auf das Gesamtgewicht des dritten Materials, aus.

Das dritte Material umfasst ein organisches Polymer und ist kein Cycloolefinpolymer. Das dritte Material ist bevorzugt ein Duroplast. Das organische Polymer des dritten Materials ist ein Polyurethan. Das Polyurethan enthält in einer bevorzugten Ausführungsform Partikel, insbesondere Partikel aus Polyurethan, zum Beispiel Nano-Domänen aus mit Stickstoff angereichertem Polyurethan oder Nitriden, vorzugsweise mit einem Durchmesser von 30 - 50 nm. Die Partikel im Polyurethan, die man auch als harte Inseln bezeichnen kann, mit einem Durchmesser von 30 - 50 nm sind für sichtbares Licht nicht wirksam, d. h. es entsteht sehr wenig Streulicht. Vorzugsweise handelt es sich bei dem Polyurethan um ein für Brillengläser geeignetes Polyurethan. Bevorzugt sind Polyurethane mit einer hohen Kerbschlagzähigkeit, wie sie typischerweise für Brillengläser zum Einsatz kommen. Am meisten bevorzugt sind als Polyurethane für das dritte Material Trivex^{®} und NXT^{®} Polyurethane. Die Materialien Trivex^{®} und NXT^{®} Polyurethan sind sehr leicht (etwa 1,1 g/cm³) extrem kerbschlagzäh, transparent im sichtbaren Wellenlängenbereich, UV-absorbierend und sie sind, wenn sie in Formschalen gegossen sind, danach relativ spannungsarm.

Das erste, zweite und/oder dritte Material ist vorzugsweise in einem vorbestimmten Wellenlängenbereich transparent. Der vorbestimmte Wellenlängenbereich ist bevorzugt der Wellenlängenbereich von 380 - 800 nm, insbesondere 380 - 780 nm.

Der optische Verbund zwischen dem ersten Teil und dem zweiten Teil erfolgt durch eine Klebstoffzusammensetzung. Diese wird ebenfalls in ihrer Brechzahl auf die beiden Partner abgestimmt, indem die Komponenten der Klebstoffzusammensetzung bzw. deren Reste auf die gewünschte Brechzahl im ausgehärteten Zustand abgestimmt wird. Dies verhindert einerseits eine interne Totalreflexion des eingespiegelten Strahlengangs und weiterhin unerwünschte Fresnel-Reflexionen. Solche Klebstoffe für Optikkomponenten werden auch als Feinkitt bezeichnet.

Für die Klebstoffzusammensetzung, d.h. das zweite Material sind alle gängigen Materialien geeignet, die optisch transparent sind und deren Brechzahl die erfindungsgemäßen Bedingungen für die Brechzahldifferenzen im Hinblick auf das erste und das dritte Material erfüllen. Insbesondere kann es sich um eine Klebstoffzusammensetzung handeln, deren klebende bzw. verbindende Eigenschaft durch Aktivierung, z.B. UV-Aktivierung erzeugt wird. Geeignete Klebstoffzusammensetzungen sind beispielsweise Klebstoffzusammensetzungen auf der Basis von Epoxidharzen, die mit Alkohol oder Thiolen gehärtet werden oder Polyurethanklebstoffe auf der Basis von Di- oder Polyisocyanaten und Alkoholen.

In einer bevorzugten Ausführungsform kann die optisch wirksame Struktur vollständig im Optikelement eingebettet sein, so dass sie sich zu keiner äußeren Grenzfläche des Optikelementes erstreckt. Bevorzugt ist die optisch wirksame Struktur in ihren Abmessungen kleiner als die Abmessung des Optikelements. Dies bedeutet, dass die optisch wirksame Struktur nur in einem Teil des Optikelements ausgebildet ist. Die eingebettet optisch wirksame Struktur kann eine maximale laterale Abmessung aufweisen, die kleiner ist als die maximale laterale Abmessung des Optikelements. Insbesondere kann sie kleiner als 50 % der lateralen Abmessung des Optikelements oder auch kleiner 40 %, 30 % oder 20 % der lateralen Abmessung des Optikelements sein. Vorzugsweise bildet die optisch wirksame Struktur eine Vertiefung in dem ersten Teil aus und die Vertiefung ist mit der Klebstoffzusammensetzung vollständig aufgefüllt.

Die optisch wirksame Struktur kann beispielsweise als reflektive und/oder diffraktive Struktur ausgebildet sein. Insbesondere kann die optisch wirksame Struktur als teilreflektive Struktur und/oder wellenlängenabhängige reflektive Struktur ausgebildet sein. Die reflektiven Flächenstücke können zusammen eine umlenkende Wirkung und gegebenenfalls zusätzlich auch noch eine abbildende Wirkung bereitstellen. Die optisch wirksame Struktur weist bevorzugt voneinander beabstandete reflektive Flächenstücke auf.

Die Reihenfolge der Materialien für das erste und das zweite Teil in dem erfindungsgemäßen Optikelement kann insbesondere bei schalenförmigem ersten und zweiten Teil so aussehen, dass innen (erstes Teil) das erste Material (Cycloolefinpolymer) und außen das dritte Material (ein Polyurethan) vorliegt, wobei die optisch wirksame Struktur in dem ersten Material, d.h. innen vorliegt. Alternativ kann innen das dritte Material (zweites Teil, ein Polyurethan) vorliegen und außen das erste Material (Cycloolefinpolymer), wobei die optisch wirksame Struktur wiederum im ersten Material (Cycloolefinpolymer) vorliegt.

In einer bevorzugten Ausführungsform sind das erste und zweite Teil (19, 22) jeweils Schalen. Die Dicke der ersten Schale und/oder der zweiten Schale ist vorzugsweise ≥ 500 µm, insbesondere ≥ 1 mm. Ferner kann die Vorderseite von der von der ersten Schale wegweisenden Seite der zweiten Schale und die Rückseite von der von der zweiten Schale wegweisenden Seite der ersten Schale gebildet sein. Die einander zugewandten Seiten der beiden Teile können mit der Klebstoffzusammensetzung miteinander verbunden, vorzugweise verklebt sein.

Das Verfahren zur Herstellung des Optikelements umfasst die Schritte:
a) Bereitstellen eines Teils, das an seiner Oberseite einen strukturierten Abschnitt aufweist,
b) Aufbringen einer für den vorbestimmten Wellenlängenbereich optisch wirksamen Beschichtung auf dem strukturierten Abschnitt, um die optisch wirksame Struktur zu bilden,
c) Bereitstellen eines Teils, das eine Unterseite aufweist, die eine komplementäre Form zur Form der Oberseite aufweist,
d) Aufbringen einer Klebstoffzusammensetzung auf der Oberseite des ersten Teils und/oder der Unterseite des zweiten Teils und
e) Verbinden der Oberseite des ersten Teils mit der Unterseite des zweiten Teils mittels der Klebstoffzusammensetzung, so dass ein Optikelement hergestellt wird, in dem die optisch wirksame Struktur vergraben ist.

Wie oben beschrieben sind das erste Teil und das zweite Teil vorzugsweise schalenförmig ausgebildet. Die Schalen können bevorzugt einstückig sein. Vor diesem Hintergrund weist ein bevorzugtes Verfahren zur Herstellung des erfindungsgemäßen Optikelements, das für einen vorbestimmten Wellenlängenbereich transparent ist und in dem eine optisch wirksame Struktur eingebettet ist, die folgenden Schritte auf:
a) Bereitstellen einer ersten für den vorbestimmten Wellenlängenbereich transparenten Schale, die einstückig ausgebildet ist und die an ihrer Oberseite einen strukturierten Abschnitt aufweist,
b) Aufbringen einer für den vorbestimmten Wellenlängenbereich optisch wirksamen Beschichtung auf dem strukturierten Abschnitt, um die optisch wirksame Struktur zu bilden,
c) Bereitstellen einer zweiten für den vorbestimmten Wellenlängenbereich transparenten Schale, die einstückig ausgebildet ist und die eine glatte Unterseite aufweist, die eine komplementäre Form zur Form der Oberseite aufweist,
d) Aufbringen einer für den vorbestimmten Wellenlängenbereich transparenten Klebstoffzusammensetzung auf der Oberseite der ersten Schale und/oder der Unterseite der zweiten Schale und
e) Verbinden der Oberseite der ersten Schale mit der Unterseite der zweiten Schale mittels der Klebstoffzusammensetzung, so dass ein zweischaliges Optikelement hergestellt wird, in dem die optisch wirksame Struktur vergraben ist.

Mit dem erfindungsgemäßen Verfahren kann das Optikelement mit nur zwei Schalen (insbesondere mit genau zwei Schalen) mit der gewünschten Genauigkeit in großer Stückzahl hergestellt werden. Das Optikelement kann jedoch auch mehr als zwei Schalen sowie zwei oder mehrere Teile aufweisen, die mit der Klebstoffzusammensetzung miteinander verklebt oder verbunden werden.

Insbesondere kann die erste und zweite Schale in den Schritten a) und c) jeweils als formstabile Schale bereitgestellt werden. Unter einer formstabilen Schale wird insbesondere eine Schale verstanden, die ihre Form beibehält, wenn außer der Schwerkraft keine anderen Kräfte auf sie einwirken.

Ferner können die erste und zweite Schale in den Schritten a) und c) so bereitgestellt werden, dass die Oberseite und die Unterseite gekrümmt ausgebildet sind. Des Weiteren können die erste und zweite Schale so bereitgestellt werden, dass die jeweilige von der Ober- und Unterseite wegweisende Seite gekrümmt ausgebildet ist. Die Krümmung kann dabei eine sphärische Krümmung, eine asphärische Krümmung oder eine sonstige Krümmung sein.

Die erste Schale kann im Schritt a) so bereitgestellt werden, dass die Oberseite mit Ausnahme des strukturierten Abschnittes als glatte Fläche ausgebildet wird.

Des Weiteren kann nach dem Schritt b) zumindest eine durch den strukturieren Abschnitt gebildete Vertiefung mit Material bis zur Oberseite aufgefüllt werden. Dabei wird bevorzugt das gleiche Material verwendet, aus dem die erste Schale gebildet ist. Ferner kann die Klebstoffzusammensetzung zum Auffüllen verwendet werden.

Die Auffüllung kann in einem Schritt oder in mehreren Auffüllschritten durchgeführt werden. Insbesondere wird die Auffüllung so durchgeführt, dass eine glatte durchgehende Oberseite vorliegt. Der aufgefüllt strukturierte Abschnitt bildet somit zusammen mit der restlichen Oberseite eine durchgehende Fläche.

Bei dem erfindungsgemäßen Verfahren kann im Schritt d) die Klebstoffzusammensetzung als Kleberschicht auf der gesamten Oberseite der ersten Schale und/oder der gesamten Unterseite der zweiten Schale aufgebracht werden. Insbesondere kann auch der strukturierte Abschnitt (bevorzugt wenn er bis zur Oberseite mit Material aufgefüllt ist) mit der Kleberschicht versehen werden.

Bei dem erfindungsgemäßen Verfahren kann nach dem Schritt b) und vor dem Schritt d) auf der optisch wirksamen Beschichtung eine Schutzschicht aus duroplastischem Material durch Gießen aufgebracht werden. Dazu kann insbesondere das RIM-Verfahren (Reaction Injection Moulding-Verfahren) eingesetzt werden. Dabei können z. B. zwei Komponenten unmittelbar vor dem Injizieren in eine Form vermischt werden, so dass die Komponenten miteinander reagieren und ein gewünschtes chemisch vernetztes Polymer bilden können. Die erste Schale ist dabei bevorzugt in einer entsprechenden Form positioniert, so dass die gewünschte Schutzschicht gebildet werden kann.

Die Bildung der ersten und/oder zweiten Schale kann insbesondere jeweils in zumindest zwei aufeinanderfolgenden Teilschritten durchgeführt werden. Dies führt zu einem verringerten Schwund bei der Herstellung der ersten bzw. zweiten Schale.

Bei dem vorbestimmten Wellenlängenbereich kann es sich um den sichtbaren Wellenlängenbereich, den nahen Infrarotbereich, den Infrarotbereich und/oder den UV-Bereich handeln.

Zum Bereitstellen der ersten Schale gemäß Schritt a) und der zweiten Schale gemäß Schritt c) kann jeweils ein Urformverfahren (wie z. B. Spritzguß, Spritzprägen, RIM, Abgießen), ein Umformverfahren (wie z. B. Thermoforming, Hot Embossing), ein abtragendes und/oder trennendes Verfahren (wie z. B. Diamantzerspanung, lonenbeschuß, Ätzen) eingesetzt werden. Natürlich ist es auch möglich, diese Verfahren zur Bereitstellung der ersten oder zweiten Schale miteinander zu kombinieren.

Die erste Schale sowie die zweite Schale sind jeweils insbesondere als formstabiles Halbzeug gebildet, die mittels der Kleberschicht miteinander verbunden werden.

Insbesondere kann die erste Schale eine mittlere Dicke aus dem Bereich von 2 mm - 5 mm (z.B. 3,5 mm) aufweisen und kann die zweite Schale eine mittlere Dicke aus dem Bereich von 0,15 mm bis 2 mm oder aus dem Bereich von 0,15 mm bis 0,25 mm (z.B. 0,17 mm) aufweisen. Das Verhältnis der mittleren Dicke der ersten Schale zur mittleren Dicke der zweiten Schale kann im Bereich von 5 - 40, 10 - 35, 15 - 25 oder 18 - 22 (z.B. 20, 20,5 oder 21) liegen.

Die erste Schale kann einen Bereich am Rand (bzw. einen randständigen Bereich) aufweisen, der eine größere Dicke als die mittlere Dicke der ersten Schale aufweist. Der randständige Bereich wird bevorzugt bei der Bestimmung der mittleren Dicke der ersten Schale nicht berücksichtigt. Des weiteren kann der randständige Bereich einstückig mit der ersten Schale ausgebildet sein oder kann ein separates Element sein, das mit der ersten Schale verbunden ist. Zum Beispiel kann der randständige Bereich mit der ersten Schale verklebt oder verkittet sein. Der randständige Bereich kann so ausgebildet sein, dass er zumindest eine weitere optische Funktionalität bereitstellt. Dabei kann es sich insbesondere um eine diffraktive und/oder reflektive optische Funktionalität handeln. Insbesondere kann die erste Schale mit dem randständigen Bereich so ausgebildet sein, dass sie L-förmig ist.

Das Aufbringen der optisch wirksamen Beschichtung gemäß Schritt b) kann beispielsweise durch Aufdampfen, Sputtern, CVD (chemisches Abscheiden aus der Gasphase), Nassbeschichtung, etc. erfolgen. Die Beschichtung kann eine Einzelschicht sein. Es ist jedoch auch möglich, mehrere Schichten aufzubringen. Insbesondere kann auch ein Interferenzschichtsystem aufgebracht werden. Ferner kann zusätzlich zumindest eine Schicht zur Haftvermittlung, eine Schicht zum mechanischen Ausgleich, eine Schutzschicht (Diffusion/Migration, thermischer Schutz, chemischer Schutz, UV-Schutz etc.) aufgebracht werden. Die optisch wirksame Beschichtung kann für spezielle Wellenlängen bzw. Spektralbereiche ausgelegt sein. Ferner kann sie zusätzlich oder alternativ ihre Funktion abhängig vom Einfallswinkel, von der Polarisation und/oder von weiteren optischen Eigenschaften aufweisen. Die optisch wirksame Struktur kann reflektierend, insbesondere hochreflektierend (z. B. spiegelartig), teildurchlässig/teilverspiegelt sein und/oder kann eine Filterwirkung bereitstellen. Ferner kann die optisch wirksame Beschichtung ein diffraktives optisches Element sein.

Die optisch wirksame Beschichtung kann nur auf den strukturierten Abschnitt aufgebracht werden. Alternativ ist es möglich, die optisch wirksame Beschichtung vollflächig aufzubringen und dann in den nicht benötigten Flächenabschnitten zu entfernen. Für ein solches Entfernen kann man z. B. chemisches Ätzen oder lonenätzen einsetzen.

Für die optisch wirksame Beschichtung kann zumindest ein Metall, zumindest ein Metalloxid, zumindest ein Metallnitrid verwendet werden. Auch ein organisches Material und/oder ein Polymermaterial kann verwendet werden. Ferner können sogenannte Hybridmaterialien, wie z. B. organisch-anorganische Hybridsysteme, organisch-modifizierte Silane/Polysiloxane verwendet werden.

Bei dem erfindungsgemäßen Verfahren können die Schritte a)-e) so durchgeführt werden, dass die optisch wirksame Struktur vollständig im transparenten Körper eingebettet ist. Somit erstreckt sich die optisch wirksame Struktur zu keiner Materialgrenzfläche des transparenten Körpers.

Ferner können die Schritte a)-e) so ausgeführt werden, dass die optisch wirksame Struktur voneinander beabstandete Flächenstücke aufweist, die die gewünschte optische Funktion bereitstellen. Die Flächenstücke können beispielsweise reflektive Flächenstücke sein. Die reflektiven Flächenstücke können eine vollständige Reflexion (nahezu 100%) oder auch nur eine Teilreflexion (teilreflektive Flächenstücke) bewirken. Insbesondere liegen die reflektiven Flächenstücke in keiner gemeinsamen Ebene. Sie können zueinander parallel versetzt sein.

Die Flächenstücke können für sich jeweils als plane Flächenstücke oder auch als gekrümmt ausgebildete Flächenstücke gebildet sein.

Bei dem erfindungsgemäßen Verfahren kann das Optikelement nach Durchführen des Schrittes e) fertiggestellt sein. Es ist jedoch auch möglich, noch zumindest einen materialabtragenden Bearbeitungsschritt durchzuführen, um beispielsweise die von der ersten Schale wegweisende Grenzfläche der zweiten Schale zu bearbeiten oder herauszuarbeiten. Gleiches gilt für die von der zweiten Schale wegweisende Grenzfläche der ersten Schale.

Natürlich kann auch noch zumindest ein oberflächenvergütender Verfahrensschritt durchgeführt werden, wie z. B. das Aufbringen einer Antireflexionsbeschichtung, einer Hartschicht, etc. Insbesondere können die aus der Fertigung von Brillengläsern bekannten Vergütungen durchgeführt werden.

Mit dem erfindungsgemäßen Verfahren kann somit das fertige Optikelement bereitgestellt werden. Es ist jedoch auch möglich, dass noch weitere Verfahrensschritte notwendig sind, um das Optikelement so fertigzustellen, dass es für seinen bestimmungsgemäßen Gebrauch einsetzbar ist.

Des weiteren wird eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten Abbildungsoptik bereitgestellt, die ein erfindungsgemäßes Optikelement aufweist und die das erzeugte Bild im auf dem Kopf des Benutzers aufgesetzten Zustand der Haltevorrichtung so abbildet, dass es der Benutzer als virtuelles Bild wahrnehmen kann.

Die Abbildungsoptik kann das Optikelement als einziges optisches Element aufweisen. Es ist jedoch auch möglich, dass die Abbildungsoptik neben dem Optikelement noch zumindest ein weiteres optisches Element umfasst.

Die Anzeigevorrichtung kann eine Steuereinheit aufweisen, die das Bilderzeugungsmodul ansteuert.

Das Bilderzeugungsmodul kann insbesondere einen flächigen Bildgeber aufweisen, wie z. B. ein LCD-Modul, ein LCoS-Modul, ein OLED-Modul oder eine Kippspiegelmatrix. Der Bildgeber kann eine Mehrzahl von Pixeln aufweisen, die z. B. in Zeilen und Spalten angeordnet sein können. Der Bildgeber kann selbstleuchtend oder nicht selbstleuchtend sein.

Das Bilderzeugungsmodul kann insbesondere so ausgebildet sein, dass es ein monochromatisches oder ein mehrfarbiges Bild erzeugt.

Die erfindungsgemäße Anzeigevorrichtung kann weitere, dem Fachmann bekannte Elemente aufweisen, die zu ihrem Betrieb notwendig sind.

Ferner wird ein Verfahren zur Herstellung der beschriebenen Anzeigevorrichtung bereitgestellt. Dabei wird das erfindungsgemäße Optikelement gemäß dem erfindungsgemäßen Herstellungsverfahren hergestellt und das so hergestellte erfindungsgemäße Optikelement wird mit den weiteren Elementen der Anzeigevorrichtung so kombiniert (oder zusammengebaut), dass die erfindungsgemäße Anzeigevorrichtung (einschließlich ihrer Weiterbildungen) hergestellt ist.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Zur besseren Anschaulichkeit wird in den Figuren zumindest teilweise auf eine maßstabs- und proportionsgetreue Darstellung und auf Schraffuren verzichtet. Es zeigen:
- Fig. 1: eine Ausführungsform der erfindungsgemäßen Anzeigevorrichtung;
- Fig. 2: eine vergrößerte Teilschnittansicht des erfindungsgemäßen Optikelementes 1 einschließlich einer schematischen Darstellung des Bilderzeugungsmoduls;
- Fig. 3 - 7: Teilschnittansichten zur Erläuterung der Herstellung des erfindungsgemäßen Optikelementes, und
- Fig. 8: eine Teilschnittansicht zur Erläuterung einer alternativen Art der Herstellung des erfindungsgemäßen Optikelementes.

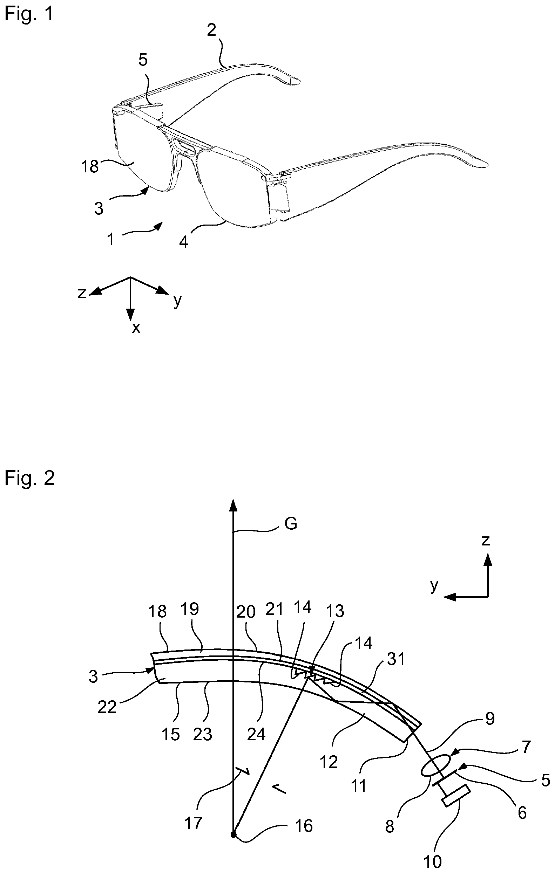

Bei der in Fig. 1 gezeigten Ausführungsform umfasst die erfindungsgemäße Anzeigevorrichtung 1 eine auf den Kopf eines Benutzers aufsetzbare Haltevorrichtung 2, die z. B. in Art eines herkömmlichen Brillengestells ausgebildet sein kann, sowie ein erstes und ein zweites Brillenglas 3, 4, die an der Haltevorrichtung 2 befestigt sind. Die Haltevorrichtung 2 mit den Brillengläsern 3, 4 kann z. B. als Sportbrille, Sonnenbrille und/oder Brille zur Korrektur einer Fehlsichtigkeit ausgebildet sein, wobei dem Benutzer über das erste Brillenglas 3 ein virtuelles Bild in sein Gesichtsfeld eingespiegelt werden kann, wie nachfolgend beschrieben wird.

Dazu umfasst die Anzeigevorrichtung 1 ein Bilderzeugungsmodul 5, das im Bereich des rechten Brillenbügels der Haltevorrichtung 2 angeordnet sein kann, wie in Fig. 1 schematisch dargestellt ist. Das Bilderzeugungsmodul 5 kann ein flächiges Bilderzeugungselement 6 (Fig. 2), wie z. B. einen OLED-, einen LCD- oder einen LCoS-Chip oder eine Kippspiegelmatrix, mit einer Vielzahl von z. B. in Spalten und Zeilen angeordneten Pixeln aufweisen.

Die Brillengläser 3 und 4 und insbesondere das erste Brillenglas 3 sind nur beispielshalber zusammen mit der erfindungsgemäßen Anzeigevorrichtung 1 beschrieben. Die Brillengläser 3, 4 bzw. zumindest das erste Brillenglas 3 sind jeweils für sich als erfindungsgemäßes Brillenglas 3, 4 oder als erfindungsgemäßes optisches Element ausgebildet. Das erfindungsgemäße optische Element kann auch in anderem Zusammenhang als mit der hier beschriebenen Anzeigevorrichtung 1 eingesetzt werden. Daher kann das optische Element, wenn es als Brillenglas ausgebildet ist, natürlich auch als zweites Brillenglas 4 ausgebildet sein.

Wie am besten aus der vergrößerten, schematischen Teilschnittansicht in Fig. 2 ersichtlich ist, weist die Anzeigevorrichtung 1 eine Abbildungsoptik 7 auf, die ein zwischen dem Bilderzeugungselement 6 bzw. dem Bildgeber 6 und dem ersten Brillenglas 3 angeordnetes Optikelement 8 enthält. Des Weiteren dient das erste Brillenglas 3 selbst auch als Teil der Abbildungsoptik 7.

Von jedem Pixel des Bildgebers 6 kann ein Lichtbündel 9 ausgehen. Durch eine entsprechende Ansteuerung der Pixel des Bildgebers 6 mittels einer Steuereinheit 10, die Teil des Bilderzeugungsmoduls 5 sein kann, kann das gewünschte Bild erzeugt werden. In Fig. 2 ist stellvertretend für die Lichtbündel 9 der Strahlengang eines Lichtstrahls eingezeichnet, so dass nachfolgend auch von dem Lichtstrahl 9 die Rede ist.

Der vom Bildgeber 6 ausgehende Lichtstrahl 9 läuft durch das Optikelement 8 und tritt über einen Einkoppelabschnitt 11 (hier die Stirnseite des ersten Brillenglases 3) in das erste Brillenglas 3 ein und wird in diesem entlang eines Lichtführungskanals 12 bis zu einem Auskoppelabschnitt 13 geführt. Der Auskoppelabschnitt 13 weist mehrere nebeneinander angeordnete reflektive Umlenkflächen 14 (die auch als reflektive Facetten bezeichnet werden können) auf, an denen eine Reflexion der Lichtstrahlen 9 in Richtung zu einer Rückseite 15 des ersten Brillenglases 3 stattfindet, so dass die Lichtstrahlen 9 über die Rückseite 15 aus dem ersten Brillenglas 3 austreten.

Somit kann ein Benutzer, wenn er die erfindungsgemäße Anzeigevorrichtung 1 bestimmungsgemäß auf dem Kopf trägt, das mittels des Bildgebers 6 erzeugte Bild als virtuelles Bild wahrnehmen, wenn er auf den Auskoppelabschnitt 13 blickt. Bei der hier beschriebenen Ausführungsform muss der Benutzer bezogen auf die Blickrichtung G eines Geradeausblicks um ca. 40° nach rechts schauen. In Fig. 2 ist zur Verdeutlichung der Drehpunkt 16 des Auges des Benutzers sowie die Eyebox 17 bzw. die Austrittspupille 17 der Abbildungsoptik 7 eingezeichnet. Die Eyebox 17 ist der Bereich, der durch die Anzeigevorrichtung 1 bereitgestellt wird und in dem sich das Auge des Benutzers bewegen kann und er stets noch das erzeugte Bild als virtuelles Bild sehen kann.

Obwohl bei der beschriebenen Ausführungsform die Einkopplung über die Stirnseite des ersten Brillenglases 3 durchgeführt ist und somit der Einkoppelabschnitt 11 auf der Stirnseite des ersten Brillenglases 3 ausgebildet ist, ist es auch möglich, eine Einkopplung über die Rückseite 15 des ersten Brillenglases durchzuführen.

Wie in der schematischen Darstellung in Fig. 2 gezeigt ist, ist sowohl die Rückseite 15 als auch die Vorderseite 18 des ersten Brillenglases 3 gekrümmt ausgebildet.

Das erste Brillenglas 3 ist ferner, wie insbesondere den Darstellungen in Fig. 2 zu entnehmen ist, zweischalig ausgebildet und umfasst eine Außenschale 19 mit einer ersten und zweiten Seite 20 und 21 sowie eine Innenschale 22 mit einer ersten und zweiten Seite 23 und 24.

Die erste Seite 20 der Außenschale 19 bildet die Vorderseite 18 des ersten Brillenglases 3 und die erste Seite 23 der Innenschale 22 bildet die Rückseite 15 des ersten Brillenglases 3. Die zweite Seite 21 der Außenschale 18 sowie die zweite Seite 24 der Innenschale 22, die einander zugewandt sind, weisen komplementäre Krümmungen auf und sind flächig über eine Kleberschicht 31 miteinander verbunden. Zur Ausbildung der Kleberschicht 31 wird die Klebstoffzusammensetzung als Klebstoff zum Verkleben der beiden Schalen 19, 22 verwendet.

Der Lichtführungskanal 12 ist so ausgebildet, dass die gewünschte Führung der Lichtstrahlen 9 vom Einkoppelabschnitt 11 bis zum Auskoppelabschnitt 13 erfolgt. Dies kann z. B. durch innere Totalreflexion an der Vorderseite 18 (= erste Seite 20 der Außenschale 19) und der Rückseite 15 (= erste Seite 23 der Innenschale 22) erfolgen. Natürlich ist es auch möglich, dass auf der Vorderseite 18 und/oder auf der Rückseite 15 im Bereich des Lichtführungskanals 12 eine reflektive Beschichtung ausgebildet ist, die die gewünschte Reflexion der Lichtstrahlen 9 bewirkt. Die Reflektivität der reflektiven Beschichtung kann z. B. so groß wie möglich (ca. 100 %) oder geringer sein. Die reflektive Beschichtung kann somit als Spiegelschicht oder als teilreflektive Schicht ausgebildet sein.

Bei der hier beschriebenen Ausführungsform sind die beiden Seiten 20, 21 der Außenschale 19 sphärisch gekrümmt und weist die erste Seite 20 der Außenschale 19 einen Krümmungsradius von 94 mm und weist die zweite Seite 21 der Außenschale 19 einen Krümmungsradius von 92 mm auf. Somit beträgt die Dicke der Außenschale 2 mm. Die Außenschale 19 kann aber auch mit einer geringen Dicke ausgebildet sein. So kann die Dicke der Außenschale 19 im Bereich von 0,15 mm bis kleiner als 2 mm liegen. Insbesondere kann die Außenschale 19 als formstabile Folie ausgebildet sein. Unter formstabil wird hier insbesondere verstanden, dass die Folie zumindest der Schwerkraft widersteht und somit ihre Form beibehält, wenn keine anderen Kräfte auf sie einwirken.

Die zweite Seite 24 der Innenschale 22 ist sphärisch gekrümmt und weist einen Krümmungsradius auf, der dem Radius der zweiten Seite 21 der Außenschale 19 entspricht. Dies ist hier also ein Radius von 92 mm. Die erste Seite 23 der Innenschale 22 ist sphärisch gekrümmt und weist den zur Korrektur der Fehlsichtigkeit des Benutzers erforderlichen Krümmungsradius auf (z. B. 150 mm bei der Verwendung von PMMA als Material für die Innenschale 22). Natürlich kann die erste Seite 23 der Innenschale auch asphärisch gekrümmt sein. Die Dicke der Innenschale 22 hängt im Wesentlichen vom Unterschied zwischen dem Radius der zweiten Seite 24 der Innenschale 22 und der ersten Seite 23 der Innenschale 22 ab und beträgt in dem hier beschriebenen Beispiel ca. 3 mm.

Die Innen- und Außenschale 22 und 19 sind bevorzugt ganzflächig über die Kleberschicht 31 verklebt, so dass ein kompaktes erstes Brillenglas 3 bereitgestellt ist.

Das erste Brillenglas 3 der hier beschriebenen Ausführungsform stellt eine Korrektur von + 2 Dioptrien bereit.

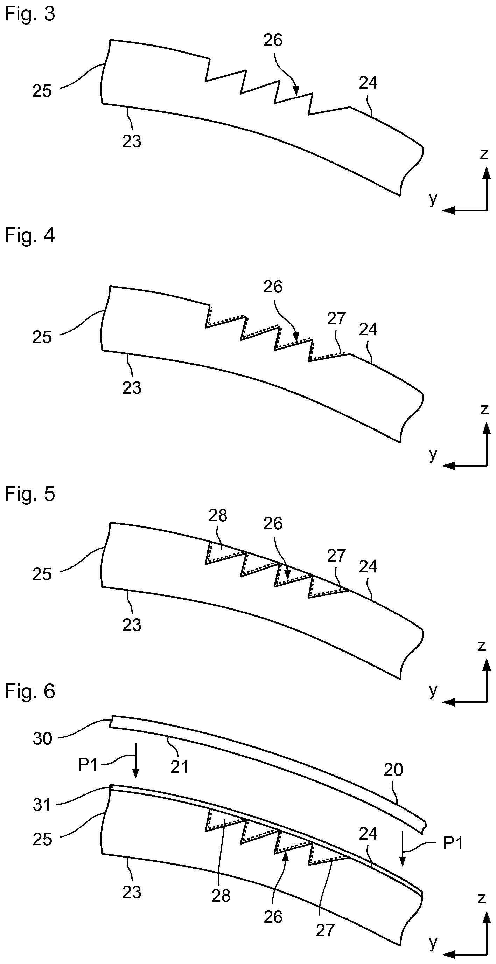

Das erfindungsgemäße optische Element kann wie folgt hergestellt werden:
In einem ersten Schritt wird ein erstes Halbzeug 25 im Spritzguss aus einem thermoplastischen Polymer hergestellt. Wie in der vergrößerten Teilschnittansicht von Fig. 3 gezeigt ist, weist das erste Halbzeug 25 die erste Seite 23 und die zweite Seite 24 auf. An der zweiten Seite 24 ist eine Mikrostrukturierung 26 ausgebildet, die die Form der gewünschten reflektiven Facetten 14 vorgibt.

Das erste Halbzeug 25 wird dann im Bereich der Mikrostrukturierung 26 mit einer optisch wirksamen Schicht 27 beschichtet, die mit gestrichelte Linie dargestellt ist (zur Vereinfachung der Darstellung ist die Schicht 27 in Fig. 2 nicht eingezeichnet). Dazu können bekannte Beschichtungsverfahren verwendet werden, wie z. B. ein chemisches Abscheiden aus der Gasphase (CVD) oder ein physikalisches Abscheiden aus der Gasphase (PVD). Die optisch wirksame Schicht 27, die in Fig. 4 gestrichelt dargestellt ist, ist so gewählt, dass die beschriebenen relativen Facetten 14 bereitgestellt sind.

Die aufgrund der Mikrostrukturierung 26 vorhandenen Vertiefungen, die sich von der zweiten Seite 24 in das Halbzeug 25 hinein erstrecken, werden in einem nachfolgenden Schritt so aufgefüllt, dass sich eine glatte durchgehende zweite Seite 24 ergibt (Fig. 5). Zum Auffüllen der Vertiefungen kann das gleiche Material 28 wie das Material zur Herstellung des Halbzeuges 25 oder auch ein optischer Kitt oder optischer Klebstoff 28 verwendet werden. Insbesondere kann die erfindungsgemäße Zusammensetzung verwendet werden.

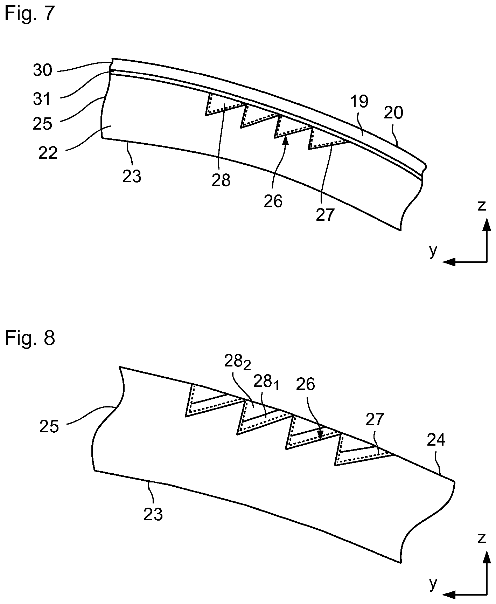

Danach wird die Außenschale 19 als zweites Halbzeug 30 im Spritzguss aus einem thermoplastischen Polymer so hergestellt, dass es die erste und zweite Seite 20, 21 aufweist. Das zweite Halbzeug 30 kann alternativ vor der Herstellung des ersten Halbzeuges 25 oder gleichzeitig mit dem ersten Halbzeug 25 hergestellt werden. Dieses zweite Halbzeug 28 wird dann ganzflächig mit dem ersten Halbzeug 25 verklebt. Dazu kann die zweite Seite 21 des zweiten Halbzeugs 30 und/oder die zweite Seite 24 des ersten Halbzeugs 25 mit einem optischen Kleber oder einem optischen Kitt beschichtet werden, um eine Kleberschicht 31 zu bilden. In Fig. 6 ist der Fall gezeigt, bei dem die zweite Seite 24 des ersten Halbzeugs 25 mit der Kleberschicht 31 beschichtet ist. Dann werden die beiden Halbzeuge an ihren Flächen 21 und 24 über die Kleberschicht 31, die auch als Klebstoffschicht bezeichnet werden kann, miteinander in Kontakt gebracht, wie durch die Pfeile P1 in Fig. 6 angedeutet ist und die Kleberschicht 31 wird ausgehärtet, um so das erfindungsgemäße optische Element 3 herzustellen, wie es in Fig. 7 gezeigt ist. Somit liegt das erfindungsgemäße optische Element 3 vor, das zweischalig aufgebaut ist, wobei die Außenseiten 23 und 20 der beiden Schalen 19 und 22 die Rückseite 15 und die Vorderseite 18 des ersten Brillenglases 3 bilden.

In Fig. 8 ist in einer vergrößerten Schnittdarstellung das erste Halbzeug 25 mit der Mikrostrukturierung 26 und der optisch wirksamen Schicht 27 gezeigt. Im Unterschied zu dem bisher beschriebenen Auffüllen der Mikrostrukturierung 26 in einem Schritt wird dies bei der Variante gemäß Fig. 8 in zwei Schritten durchgeführt. Damit kann ein unerwünschter Schrumpf, der beim Aushärten des Materials der Auffüllschichten 28₁, 28₂ auftreten kann (Auffüllschicht 28₁ und danach Auffüllschicht 28₂), vermindert werden. Natürlich kann die Auffüllung auch in mehr als zwei Schritten, z. B. in drei, vier, fünf, sechs Schritten durchgeführt werden.

Bei der erfindungsgemäßen Anzeigevorrichtung 1 erfolgt die Einspiegelung des virtuellen Bildes in das Gesichtsfeld des Benutzers über das erste Brillenglas 3. Natürlich ist auch eine Einspiegelung über das zweite Brillenglas 4 möglich. Des Weiteren kann die Anzeigevorrichtung 1 so ausgebildet sein, dass Informationen bzw. virtuelle Bilder über beide Brillengläser 3, 4 eingespiegelt werden. Dabei kann die Einspiegelung so erfolgen, dass ein dreidimensionaler Bildeindruck entsteht. Dies ist jedoch nicht zwingend notwendig.

Die Brillengläser 3, 4 können eine Brechkraft von Null oder eine von Null verschiedene Brechkraft (insbesondere zur Korrektur von Fehlsichtigkeiten) aufweisen. Wie in den Figuren gezeigt ist, sind sowohl die Vorderseite 11 als auch die Rückseite 12 des Brillenglases 3 gekrümmt ausgebildet. Die Vorderseite 11 kann insbesondere sphärisch gekrümmt sein. Wenn das Brillenglas eine von Null verschiedene Brechkraft aufweist, um eine Fehlsichtigkeit zu korrigieren, ist in der Regel die Krümmung der Rückseite 15 entsprechend gewählt, um die entsprechende Korrektur zu erreichen. Die Rückseite 15 kann eine von der sphärischen Form abweichende Krümmung aufweisen.

Die Haltevorrichtung 2 muss nicht als brillenartige Haltevorrichtung ausgebildet sein. Es ist auch jede andere Art der Haltevorrichtung möglich, mit der ein Aufsetzen oder Tragen der Anzeigevorrichtung auf dem Kopf des Benutzers erfolgen kann.

Bei den beschriebenen Ausführungsbeispielen ist das Brillenglas 3 zweischalig ausgebildet. Es ist jedoch auch möglich, das Brillenglas mit mehr als zwei Schalen, z.B. zumindest drei Schalen, herzustellen. Insbesondere kann das Brillenglas aus zwei Teilen (die nicht notwendigerweise Schalen sein müssen) oder aus mehr als zwei Teilen herzustellen. Die Schalen bzw. Teile werden dann bevorzugt mit der Klebstoffzusammensetzung verklebt.

Das nachfolgende Beispiel erläutert die Erfindung.

Beispiel:
Beim Einsatz von Polyurethanen von NXT^{®} für das dritte Material und Zeonex^{®} für das erste Material haben sich in einer experimentellen Herstellung folgende Brechwerte ergeben:
Vier Polyurethan-Proben der Firma NXT zeigten bei 22°C folgende vier Brechwerte n_{D}(589,3 nm):

| | |
|---|---|
| Probe 1: | 1,5269 |
| Probe 2: | 1,5272 |
| Probe 3: | 1,5277 |
| Probe 4: | 1,5277 |

Für das Cycloolefinpolymer mit der Handelsbezeichnung Zeonex^{®} wurde bei 22°C für die beiden Produkte 480R und E48R folgender Brechwert n_{D}(589,3 nm) gemessen:

| | |
|---|---|
| Probe A: | 1,5254 (480R) |
| Probe B: | 1,5314 (E48R) |

Durch Mischen der Proben A und B (65/100 Volumenanteile) wurde eine Brechzahl n_{D} von 1,5275 erhalten, die gut an die Proben 2 bis 4 angepasst war.

## Patentansprüche

1. Optikelement für eine auf den Kopf eines Benutzers aufsetzbare und ein Bild erzeugende Anzeigevorrichtung (1), das
eine Vorderseite (18) und eine Rückseite (15),
einen Einkoppelabschnitt (11) und einen vom Einkoppelabschnitt (11) beabstandeten Auskoppelabschnitt (13) und
einen Lichtführungskanal (12) aufweist, der dazu geeignet ist, Lichtbündel (9) von Pixeln des erzeugten Bildes, die über den Einkoppelabschnitt (11) des Optikelementes (3) in das Optikelement (3) eingekoppelt sind, im Optikelement (3) bis zum Auskoppelabschnitt (13) zu führen, von dem sie aus dem Optikelement (3) ausgekoppelt werden,
wobei der Auskoppelabschnitt (13) eine optisch wirksame Struktur aufweist, die eine Umlenkung der Lichtbündel (9) zur Auskopplung bewirkt, und wobei das Optikelement ein erstes Teil (19) aus einem ersten Material aufweist, das die optisch wirksame Struktur umfasst, und das Optikelement ein zweites Teil (22) aus einem dritten Material aufweist, wobei die beiden Teile (19, 22) mit einer Klebstoffzusammensetzung (31) aus einem zweiten Material miteinander verbunden sind, wobei das erste Material ein oder mehrere Cycloolefinpolymere umfasst und der Anteil des einen Cycloolefinpolymers oder der mehreren Cycloolefinpolymere bezogen auf das Gesamtgewicht des ersten Materials, mindestens 95 Gew.-% ist;
**dadurch gekennzeichnet, dass** das erste und dritte Material voneinander verschieden sind, wobei das zweite und dritte Material jeweils mindestens ein organisches Polymer umfasst, das oder die Polymere des dritten Materials mindestens 95 Gew.-% ausmachen, bezogen auf das Gesamtgewicht des dritten Materials, das dritte Material kein Cycloolefinpolymer ist und das organische Polymer des dritten Materials Polyurethan ist;
und wobei die Brechzahldifferenzen für mindestens eine Wellenlänge zwischen 380 nm und 800 nm zwischen dem ersten Material und dem zweiten Material und zwischen dem zweiten Material und dem dritten Material jeweils ≤ 0,02 sind.

2. Optikelement nach Anspruch 1, **dadurch gekennzeichnet, dass** der Anteil des einen Cycloolefinpolymers oder der mehreren Cycloolefinpolymere, bezogen auf das Gesamtgewicht des ersten Materials, mindestens 98 Gew.-% ausmacht.

3. Optikelement nach Anspruch 1 oder 2, **dadurch gekennzeichnet, dass** das erste Material eine Mischung aus mindestens zwei voneinander verschiedenen Cycloolefinpolymeren umfasst.

4. Optikelement nach einem der Ansprüche 1 bis 3, **dadurch gekennzeichnet, dass** die Brechzahldifferenzen zwischen dem ersten und dem zweiten Material und zwischen dem zweiten und dem dritten Material für mindestens eine Wellenlänge zwischen 380 nm und 800 nm jeweils ≤ 0,005 sind.

5. Optikelement nach einem der Ansprüche 1 bis 4, **dadurch gekennzeichnet, dass** die Brechzahldifferenz zwischen dem ersten und dem dritten Material für mindestens eine Wellenlänge zwischen 380 nm und 800 nm ≤ 0,005 ist.

6. Optikelement nach einem der Ansprüche 1 bis 5, **dadurch gekennzeichnet, dass** das Cycloolefinpolymer ein Polymer von Cyclopenten, Cyclohexen, Cyclohepten, Norbornen und deren Derivate oder Cyclopentadien ist.

7. Optikelement nach einem der Ansprüche 1 bis 6, **dadurch gekennzeichnet, dass** die optisch wirksame Struktur eine Vertiefung in dem ersten Teil ausbildet und die Vertiefung mit der Klebstoffzusammensetzung (31) vollständig aufgefüllt ist.

8. Optikelement nach einem der Ansprüche 1 bis 7, **dadurch gekennzeichnet, dass** das erste und zweite Teil (19, 22) jeweils Schalen sind.

9. Optikelement nach einem der Ansprüche 1 bis 8, **dadurch gekennzeichnet, dass** die optisch wirksame Struktur voneinander beabstandete reflektive Flächenstücke aufweist.

10. Anzeigevorrichtung mit einer auf den Kopf eines Benutzers aufsetzbaren Haltevorrichtung (2), einem an der Haltevorrichtung (2) befestigten Bilderzeugungsmodul (5), das ein Bild erzeugt, und einer an der Haltevorrichtung (2) befestigten Abbildungsoptik (7), die ein Optikelement (3) nach einem der Ansprüche 1 bis 9 aufweist und die dazu ausgelegt ist das erzeugte Bild im auf dem Kopf des Benutzers aufgesetzten Zustand der Haltevorrichtung (2) so ab zu bilden, dass es der Benutzer als virtuelles Bild wahrnehmen kann.

11. Verfahren zur Herstellung eines Optikelements nach einem der Ansprüche 1 bis 9, in dem eine optisch wirksame Struktur eingebettet ist, mit folgenden Schritten:
a) Bereitstellen eines ersten Teils (19), das an seiner Oberseite einen strukturierten Abschnitt aufweist,
b) Aufbringen einer für den vorbestimmten Wellenlängenbereich optisch wirksamen Beschichtung auf dem strukturierten Abschnitt, um die optisch wirksame Struktur zu bilden,
c) Bereitstellen eines zweiten Teils (22), das eine Unterseite aufweist, die eine komplementäre Form zur Form der Oberseite des ersten Teils aufweist,
d) Aufbringen einer Klebstoffzusammensetzung auf der Oberseite des ersten Teils (19) und/oder der Unterseite des zweiten Teils (22) und
e) Verbinden der Oberseite des ersten Teils mit der Unterseite des zweiten Teils mittels der Klebstoffzusammensetzung, so dass ein Optikelement hergestellt wird, in dem die optisch wirksame Struktur vergraben ist, wobei das Optikelement ein erstes Teil (19) aus einem ersten Material aufweist, das die optisch wirksame Struktur umfasst, und das Optikelement ein zweites Teil (22) aus einem dritten Material aufweist, wobei die beiden Teile (19, 22) mit einer Klebstoffzusammensetzung (31) aus einem zweiten Material miteinander verbunden sind, wobei das erste Material ein oder mehrere Cycloolefinpolymere umfasst, und
der Anteil des einen Cycloolefinpolymers oder der mehreren Cycloolefinpolymere bezogen auf das Gesamtgewicht des ersten Materials, mindestens 95 Gew.-% ist; **dadurch gekennzeichnet, dass** das erste und dritte Material voneinander verschieden sind wobei das zweite und dritte Material jeweils mindestens ein organisches Polymer umfasst, das oder die Polymere des dritten Materials mindestens 95 Gew.-% ausmachen bezogen auf das Gesamtgewicht des dritten Materials, das dritte Material kein Cycloolefinpolymer ist und das organische Polymer des dritten Materials Polyurethan ist;
wobei die Brechzahldifferenzen für mindestens eine Wellenlänge zwischen 380 nm und 800 nm zwischen dem ersten Material und dem zweiten Material und zwischen dem zweiten Material und dem dritten Material jeweils ≤ 0,02 sind.

## Claims

1. An optical element for a display device (1) which can be placed onto the head of a user and generates an image, which element
has a front side (18) and a rear side (15),
an input portion (11) and an output portion (13) spaced apart from the input portion (11) and
a light-guiding channel (12), which is suitable for guiding bundles of light (9) of pixels of the generated image that are input into the optical element (3) via the input portion (11) of the optical element (3) in the optical element (3) to the output portion (13), from which they are output from the optical element (3),
wherein the output portion (13) has an optically effective structure which brings about a deflection of the bundles of light (9) for output, and wherein
the optical element has a first part (19) of a first material, which comprises the optically effective structure, and the optical element has a second part (22) of a third material, wherein the two parts (19, 22) are connected to one another with an adhesive composition (31) of a second material, wherein the first material comprises one or more cycloolefin polymers and the proportion of the one or more cycloolefin polymers is at least 95% by weight based on the total weight of the first material;
**characterized in that** the first and third materials are different from one another, wherein the second and third materials comprise in each case at least one organic polymer, the polymer(s) of the third material make up at least 95% by weight of the third material, the third material is not a cycloolefin polymer and the organic polymer of the third material is polyurethane, and wherein the differences in the refractive index for at least one wavelength of between 380 nm and 800 nm between the first material and the second material and between the second material and the third material are in each case ≤ 0.02.

2. The optical element as claimed in claim 1, **characterized in that** the proportion of the one or more cycloolefin polymers, based on the total weight of the first material, is at least 98% by weight.

3. The optical element as claimed in claim 1 or 2, **characterized in that** the first material comprises a mixture of at least two cycloolefin polymers that are different from one another.

4. The optical element as claimed in one of claims 1 to 3, **characterized in that** the differences in the refractive index between the first material and the second material and between the second material and the third material for at least one wavelength of between 380 nm and 800 nm are in each case ≤ 0.005.

5. The optical element as claimed in one of claims 1 to 4, **characterized in that** the difference in the refractive index between the first material and the third material for at least one wavelength of between 380 nm and 800 nm is ≤ 0.005.

6. The optical element as claimed in one of claims 1 to 5, **characterized in that** the cycloolefin polymer is a polymer of cyclopentene, cyclohexene, cycloheptene, norbornene and derivatives thereof or cyclopentadiene.

7. The optical element as claimed in one of claims 1 to 6, **characterized in that** the optically effective structure forms a depression in the first part and the depression is completely filled with the adhesive composition (31).

8. The optical element as claimed in one of claims 1 to 7, **characterized in that** the first part (19) and the second part (22) are in each case shells.

9. The optical element as claimed in one of claims 1 to 8, **characterized in that** the optically effective structure has reflective surface elements spaced apart from one another.

10. A display device having a holding device (2) that can be placed onto the head of a user, an image generating module (5) that is fastened to the holding device (2) and generates an image and an imaging optical unit (7) that is fastened to the holding device (2), has an optical element (3) as claimed in one of claims 1 to 9 and, in the state of the holding device (2) in which it has been placed on the head of the user, configured to project the generated image in such a way that the user can perceive it as a virtual image.

11. A method for producing an optical element as claimed in one of claims 1 to 9, in which an optically effective structure is embedded, comprising the following steps:
a) providing a first part (19) which has a structured portion on its upper side,
b) applying a coating which is optically effective for the predetermined wavelength range to the structured portion in order to form the optically effective structure,
c) providing a second part (22) which has an underside that has a form complementary to the form of the upper side of the first part,
d) applying an adhesive composition to the upper side of the first part (19) and/or the underside of the second part (22) and
e) connecting the upper side of the first part to the underside of the second part by means of the adhesive composition, so that an optical element in which the optically effective structure is buried is produced, wherein the optical element has a first part (19) of a first material, which comprises the optically effective structure, and the optical element has a second part (22) of a third material, wherein the two parts (19, 22) are connected to one another with an adhesive composition (31) of a second material, wherein the first material comprises one or more cycloolefin polymers and the proportion of the one or more cycloolefin polymers is at least 95% by weight based on the total weight of the first material,
**characterized in that** the first and third materials are different from one another, wherein the second and third materials comprise in each case at least one organic polymer, the polymer(s) of the third material make up at least 95% by weight of the third material, the third material is not a cycloolefin polymer and the organic polymer of the third material is polyurethane, wherein the differences in the refractive index for at least one wavelength of between 380 nm and 800 nm between the first material and the second material and between the second material and the third material are in each case ≤ 0.02.

## Revendications

1. Élément optique pour un dispositif d'affichage (1) pouvant être placé sur la tête d'un utilisateur et générant une image, qui présente une face avant (18) et une face arrière (15), une section de couplage (11) et une section de découplage (13) écartée de la section de couplage (11) et un canal de guidage de lumière (12), qui convient pour guider des faisceaux lumineux (9) de pixels de l'image générée, qui sont couplés par l'intermédiaire de la section de couplage (11) de l'élément optique (3) dans l'élément optique (3), dans l'élément optique (3) jusqu'à la section de découplage (13), par laquelle ils sont découplés de l'élément optique (3), la section de découplage (13) présentant une structure optiquement active qui provoque une déviation des faisceaux lumineux (9) pour le découplage, l'élément optique présentant une première partie (19) en un premier matériau, qui comprend la structure optiquement active, l'élément optique présentant une deuxième partie (22) en un troisième matériau, les deux parties (19, 22) étant reliées l'une à l'autre à l'aide d'une composition adhésive (31) en un deuxième matériau, le premier matériau comprenant un ou plusieurs polymères de cyclooléfine et la proportion dudit un polymère de cyclooléfine ou desdits plusieurs polymères de cyclooléfine représentant au moins 95 % en poids par rapport au poids total du premier matériau, **caractérisé en ce que** le premier et le troisième matériau sont différents l'un de l'autre, le deuxième et le troisième matériau comprenant chacun au moins un polymère organique, le ou les polymères du troisième matériau représentant au moins 95 % en poids par rapport au poids total du troisième matériau, le troisième matériau n'étant pas un polymère de cyclooléfine et le polymère organique du troisième matériau étant du polyuréthane ; et les différences des indices de réfraction pour au moins une longueur d'onde entre 380 nm et 800 nm entre le premier et le deuxième matériau et entre le deuxième et le troisième matériau étant respectivement ≤ 0,02.

2. Élément optique selon la revendication 1, **caractérisé en ce que** la proportion dudit un polymère de cyclooléfine ou desdits plusieurs polymères de cyclooléfine, par rapport au poids total du premier matériau, représente au moins 98 % en poids.

3. Élément optique selon la revendication 1 ou 2, **caractérisé en ce que** le premier matériau comprend un mélange d'au moins deux polymères de cyclooléfine différents l'un de l'autre.

4. Élément optique selon l'une quelconque des revendications 1 à 3, **caractérisé en ce que** les différences des indices de réfraction entre le premier et le deuxième matériau et entre le deuxième et le troisième matériau pour au moins une longueur d'onde entre 380 nm et 800 nm sont respectivement ≤ 0,005.

5. Élément optique selon l'une quelconque des revendications 1 à 4, **caractérisé en ce que** la différence des indices de réfraction entre le premier et le troisième matériau pour au moins une longueur d'onde entre 380 nm et 800 nm est ≤ 0,005.

6. Élément optique selon l'une quelconque des revendications 1 à 5, **caractérisé en ce que** le polymère de cyclooléfine est un polymère de cyclopentène, de cyclohexène, de cycloheptène, de norbornène et leurs dérivés ou de cyclopentadiène.

7. Élément optique selon l'une quelconque des revendications 1 à 6, **caractérisé en ce que** la structure optiquement active forme un creux dans la première partie et le creux est complètement rempli de la composition adhésive (31).

8. Élément optique selon l'une quelconque des revendications 1 à 7, **caractérisé en ce que** la première et la deuxième partie (19, 22) sont chacune des coques.

9. Élément optique selon l'une quelconque des revendications 1 à 8, **caractérisé en ce que** la structure optiquement active présente des morceaux de surface réfléchissants, écartés les uns des autres.

10. Dispositif d'affichage présentant un dispositif de maintien (2) pouvant être placé sur la tête d'un utilisateur, un module de génération d'image (5) fixé au dispositif de maintien (2), qui génère une image, et une optique d'affichage (7) fixée au dispositif de maintien (2), qui présente un élément optique (3) selon l'une quelconque des revendications 1 à 9 et qui est conçue pour afficher l'image générée dans l'état du dispositif de maintien (2) placé sur la tête de l'utilisateur de manière telle que l'utilisateur peut l'observer en tant qu'image virtuelle.

11. Procédé pour la fabrication d'un élément optique selon l'une quelconque des revendications 1 à 9, dans lequel une structure optiquement active est intégrée, présentant les étapes suivantes :
a) réalisation d'une première partie (19), qui présente une section structurée sur sa face supérieure,
b) application d'un revêtement optiquement actif pour la plage de longueurs d'onde prédéfinie sur la section structurée pour former la structure optiquement active,
c) réalisation d'une deuxième partie (22) qui présente une face inférieure qui présente une forme complémentaire à la forme de la face supérieure de la première partie,
d) application d'une composition adhésive sur la face supérieure de la première partie (19) et/ou la face inférieure de la deuxième partie (22) et
e) assemblage de la face supérieure de la première partie et de la face inférieure de la deuxième partie au moyen de la composition adhésive de manière à fabriquer un élément optique dans lequel la structure optiquement active est enfouie, l'élément optique présentant une première partie (19) en un premier matériau, qui comprend la structure optiquement active, et l'élément optique présentant une deuxième partie (22) en un troisième matériau, les deux parties (19, 22) étant reliées l'une à l'autre à l'aide d'une composition adhésive (31) en un deuxième matériau, le premier matériau comprenant un ou plusieurs polymères de cyclooléfine et la proportion dudit un polymère de cyclooléfine ou desdits plusieurs polymères de cyclooléfine étant d'au moins 95 % en poids par rapport au poids total de premier matériau,
**caractérisé en ce que** le premier et le troisième matériau sont différents l'un de l'autre, le deuxième et le troisième matériau comprenant chacun au moins un polymère organique, le ou les polymères du troisième matériau représentant au moins 95 % en poids par rapport au poids total du troisième matériau, le troisième matériau n'étant pas un polymère de cyclooléfine et le polymère organique du troisième matériau étant du polyuréthane ; les différences des indices de réfraction pour au moins une longueur d'onde entre 380 nm et 800 nm entre le premier et le deuxième matériau et entre le deuxième et le troisième matériau étant respectivement ≤ 0,02.
